# EUROPEAN PATENT APPLICATION

(11) **EP 4 455 521 A1**
(43) Date of publication of application: **30.10.2024**
(21) Application number: 24170378.4
(22) Date of filing: 16.04.2024
(51) Int. Cl.: F16K 31/126, F16K 37/00, B65B 3/36, B67C 3/28

(54) **A METHOD FOR DETERMINING A CONDITION OF A PNEUMATIC ACTUATOR, A CONTROL SYSTEM, A VALVE ARRANGEMENT, AND A FOOD HANDLING MACHINE**

(30) Priority: 28.04.2023 EP 23170858
(71) Applicant: Tetra Laval Holdings & Finance S.A., 1009 Pully (CH)
(72) Inventor: Lindberg, Peter, 22186 Lund (SE)
(74) Representative: Tetra Pak - Patent Attorneys SE

(57) **Abstract**

A method (400) for determining a condition of a pneumatic actuator (100) is presented. The method comprises
providing (402), by using a control unit (102), a digital output (104) representing a command to open the pneumatic actuator (100), said digital output (104) having an activation time point (300) and a deactivation time point (302),
measuring (404), by using a sensor (106), a position as a function of time of the pneumatic actuator (100), thereby forming a position data set (108),
extracting (406) a number of parameters by comparing the digital output (104) and the position data set (108), and
indicating (408) the condition of the pneumatic actuator (100) based on the parameters extracted.

## Description

### Technical Field

The invention generally relates to the field of pneumatic actuators. More particularly, it is related to methods and apparatuses for condition monitoring pneumatic actuators.

### Background Art

Today, pneumatic actuators are used for various tasks in the field of food production. For instance, pneumatic actuators are today used for intermittently controlling a valve arrangement in a filling station in a packaging system. In this context, when a carton package or a bottle is placed below a filling nozzle of the valve arrangement, the pneumatic actuator triggers the valve arrangement to open such that liquid food, such as milk or juice, is filled into the package or the bottle. Once a pre-set volume has been filled into the package or bottle, the pneumatic actuator triggers the valve arrangement to close such that a flow of the liquid food into the package or bottle is halted. After being halted, the package or bottle may be fed downstream to a station for closing the package or bottle. For the carton package case, such station may be a top forming station in which a top of the package is closed. For the bottle case, such station may be a capping station in which the bottle is closed by having a cap screwed or pushed onto the bottle.

To assure that a correct volume is filled into the packages or bottles, it is today common to weigh packages or bottles to assure that the correct volume is filled into the packages or bottles. In this way, in case the pneumatic actuator, forming part of the valve arrangement, is quality assessed in an indirect manner. For instance, in case the packages or bottles, after being filled, are found to weigh above a pre-set weight, a service technician may be called to review the pneumatic actuator to assure that this is not defect.

The pneumatic actuator may also be reviewed in a direct manner. For instance, the service technician may review the functionality and components of the pneumatic actuator at regular intervals to assure that this is not worn out or in any other way defect. Such service may be triggered by that the pneumatic actuator has been in use for a certain time period, e.g. forming part of the filling station, or it may be triggered by that the pneumatic actuator has been in operation for a certain number of hours.

Even though the pneumatic actuator are today regularly controlled both in indirect and direct manners, there is a need to be able to even more closely monitor a condition of the pneumatic actuator such that proper actions can be made even faster such that in turn more cost efficient food production can be achieved. In addition, by being able to spot deviations even earlier than possible to today, fewer food packages not fulfilling quality standards are produced, which provides for less waste and in turn an improved environmental footprint.

### Summary

It is an object of the invention to at least partly overcome one or more of the above-identified limitations of the prior art. In particular, it is an object to provide a method and a device for reliably and efficiently determining a condition of the pneumatic actuator by comparing a control signal transmitted to the pneumatic actuator, herein referred to as digital output, and an actual movement of the pneumatic actuator, herein referred to as position data set. By being able to determine the condition in this way, the downtime may be reduced resulting in more cost efficient food production. Further, by being able to monitor the condition continuously instead of at regular intervals manually, it is made possible to prolong the lifetime of the pneumatic actuator.

According to a first aspect it is provided a method for determining a condition of a pneumatic actuator, said method comprising
providing, by using a control unit, a digital output representing a command to open the pneumatic actuator, said digital output having an activation time point and a deactivation time point,
measuring, by using a sensor, a position as a function of time of the pneumatic actuator, thereby forming a position data set,
extracting a number of parameters by comparing the digital output and the position data set, and
indicating the condition of the pneumatic actuator based on the parameters extracted.

As described above, by being able to extract parameters by comparing the digital output with the position data set, it is made possible to determine the condition of the pneumatic actuator in a both cost and time efficient manner, which in turn may result in that an uptime of a food processing line or other production line can be improved. A further advantage is that the pneumatic actuator can be used up until a point in time in which deterioration is detected, that is, the lifetime of the pneumatic actuator can be improved.

The condition of the pneumatic actuator should in this context be given a broad meaning including both direct effects caused by the pneumatic actuator itself as well as indirect effects not caused by the pneumatic actuator itself. For instance, in case driven mechanics used for moving a piston in a valve is starting to be worn out, this may affect the condition of the pneumatic actuator in that the parameters extracted from the position data set are deviating from the digital output.

The pneumatic actuator may form part of a valve comprising a rubber coating, and the number of parameters may comprise
a primary activation time difference (PATD) between the activation time point of the digital output and a measured start activation time point of movement of the pneumatic actuator, and
a secondary activation time difference (SATD) between the activation time point of the digital output and a measured time point to reach a pre-set share of an activation distance of the pneumatic actuator,
wherein the primary activation time difference (PATD) and the secondary activation time difference (SATD) are used for indicating if there is one or several cracks in the rubber coating of the pneumatic actuator.

An advantage with being able to determine cracks in the rubber coating is that only the coating may be replaced. Another advantage is that the cause of the deteriorated condition can be identified efficiently.

The valve may be driven by the pneumatic actuator.

The pneumatic actuator may form part of the valve comprising the rubber coating, wherein the number of parameters may further comprise
an initial position at the activation time point of the digital output,
wherein the initial position at the activation time point of the digital output is used for determining damages, such as compression, wear or deformation, of the rubber coating of the pneumatic actuator.

An advantage with using this parameter is that the compression of the rubber coating is identified, and by repeating this process deteriorations of the rubber can be identified.

The number of parameters may comprise a gradient at a point in which a pre-set share of the activation movement completed, such as at a point in which 10% of the activation movement is completed, such that total friction and restrictor setting deviation and/or air pressure deviation can be captured.

An advantage with this parameter is that deterioration of the restrictor and air pressure supply can be detected.

The number of parameters may comprise a time difference between the activation time point of the digital output and an activation movement completion time point, such that end damping deviations can be captured.

The number of parameters may comprise an actual position at the deactivation time point of the digital output such that mechanical wear can be captured.

The number of parameters may comprise a time difference between a deactivation time point of the digital output and a deactivation movement initiation time point such that programmable logic circuits (PLC) variations can be captured.

The number of parameters may comprise a time difference between the deactivation movement initiation time point and a time point in which a pre-set share of the deactivation movement is completed, such as at a point in which in which 10% of the deactivation movement is completed, such that total friction and restrictor setting deviation and/or air pressure deviation can be captured.

The providing the digital output, measuring the position as a function of time, and extracting the number of parameters may be repeated for a plurality of cycles, and the indicating the condition of the pneumatic actuator may comprise combining the number of parameters extracted from the plurality of cycles, identifying anomalies over time for the number of parameters.

An advantage by repeating for the plurality of cycles and identifying the anomalies is that deterioration over time can be captured.

The plurality of cycles may be more than 1000 cycles.

According to a second aspect it is provided a control system for determining a condition of a pneumatic actuator configured to operate intermittently, said control system comprising
a sensor communication device arranged to communicate with a sensor in the pneumatic actuator, said sensor communication device being configured to measure a position as a function of time for the pneumatic actuator, thereby forming a position data set, and
a control unit comprising a processor and a memory, said control unit being configured to provide a digital output to the pneumatic actuator, said digital output representing a command to open the pneumatic actuator, said digital output having an activation time point and a deactivation time point, said control unit being configured to extract a number of parameters by comparing the digital output and the position data set, and to determine the condition of the pneumatic actuator based on the number of parameters extracted.

The same features and advantages as presented above with respect to the first aspect also apply to this second aspect.

According to a third aspect it is provided a valve arrangement for a food handling machine, said valve arrangement comprising
a product valve comprising a pneumatic actuator, said product valve being arranged to control a food product flow within the food handling machine,
a control system according to the second aspect for determining a condition of the pneumatic actuator, and
a condition monitoring device configured to transmit a notification in case the condition of the pneumatic actuator is outside a condition interval.

According to a fourth aspect it is provided a food handling machine, such as a filling machine, comprising a valve arrangement according to the third aspect.

The product valve may be arranged for portioning food product into a food package.

According to a fifth aspect it is provided a computer program product comprising program code for performing, when executed on a processor device, the method according to the first aspect.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 illustrates a pneumatic actuator by way of example.
Fig. 2A and 2B illustrate a food handling machine, more particularly a filling station, comprising the pneumatic actuator.
Fig. 3A is a graph illustrating a digital output and a position data set related to the pneumatic actuator.
Fig. 3B is a graph illustrating the digital out and the position data set as well as a number of parameters that can be used for determining the condition of the pneumatic actuator.
Fig. 4 is a flowchart illustrating a method for determining a condition of the pneumatic actuator.

### Detailed Description

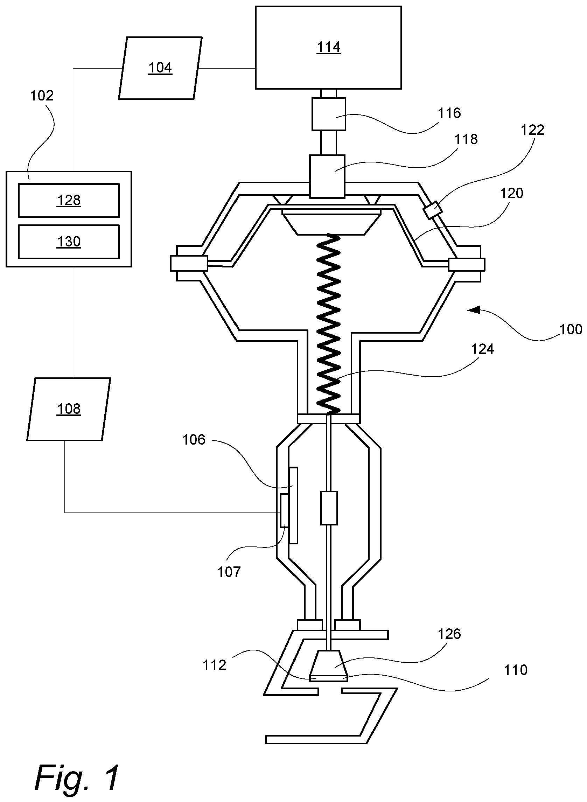

With reference to Fig. 1, a pneumatic actuator 100 is illustrated by way of example. The pneumatic actuator 100 may as illustrated herein form part of a valve, but it may also form part of other pieces of equipment in which movements between two or more states take place. Generally, the pneumatic actuator 100 converts energy in the form of compressed air into mechanical motion.

A control unit 102 may be communicatively connected to the pneumatic actuator 100. As illustrated, a sensor 106 may be placed such that the mechanical motion generated by the pneumatic actuator 100 can be monitored. A position data set 108, captured by the sensor 106, may be transferred to the control unit 102 via a sensor communication device 107. As illustrated, the position data set 108 may reflect a movement of a piston of the pneumatic actuator 100.

In addition to receiving the position data set 108, the control unit 102 may also be configured to transmit a digital output 104 to the pneumatic actuator 100. The digital output 104 may comprise a command to open an air supply 114. In case the pneumatic actuator 100 forms part of the valve, as illustrated in fig. 1, the command to open the pneumatic actuator 100 will have, provided for that the command is followed, the effect that the valve is opened.

By providing the digital output 104, that is, a digital control signal, and capturing the position data set 108 it is made possible to compare the movement of the piston, i.e. the position data set 108, with the digital output 104 and based on the comparisons draw conclusions on the condition of the pneumatic actuator 100 or the valve the pneumatic actuator 100 is forming part of. For instance, a disc 126, sometimes also referred to as valve seat, provided with a rubber coating 110 may be used for preventing product leakage when closing the valve. In case there are cracks, grooves (permanent deformations) or damages 112 in the rubber coating 110, this may, as described below in further detail, result in different results when comparing the position data set 108 with the digital output 104.

As illustrated in fig. 1, by way of example, a restrictor 116 may be provided downstream the air supply 114 such that the amount fed into the pneumatic actuator 100 can be controlled. To move the piston described above, the pneumatic actuator 100 may be provided with an air inlet 122, placed downstream the restrictor 116. By feeding in air into the pneumatic actuator 100, a diaphragm 120 is moved. By having the diaphragm 120 connected to a spring 124, in turn connected to the piston, the piston will be moved as an effect of that the air is fed into the pneumatic actuator 100. To move the piston in opposite direction, in the illustrated example, such that the valve is opened, an air outlet 122 may be provided such that air is released from the pneumatic actuator 100.

The example illustrated in fig. 1 is one out of many possible examples of the pneumatic actuator 100, and the principle of translating compressed air into mechanical motion may be embodied in a large variety of ways.

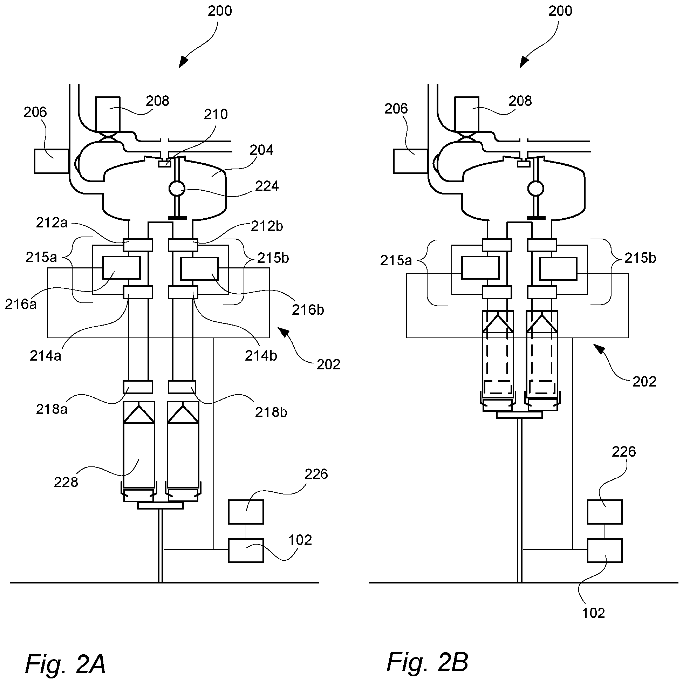

Fig. 2A and 2B illustrate, by way of example, a food handling machine 200, more particularly a filling station, using pneumatic actuators as illustrated in fig. 1. As illustrated in fig. 2A, food packages 228, herein so-called carton gable top packages with open top ends, are transported to the filling station 200 in a transportation mode. In this mode, the packages 228 may be placed in a lower position. During filling, that is, during a filling mode, as illustrated in fig. 2B, the packages 228 may be lifted such that filling nozzles 218a,b are placed inside the packages 228, thereby allowing for efficient filling of food product into the packages 228.

The filling of the packages 228 may be handled by a control system 202. Before entering the control system 202, the liquid food product may be held in a product tank 204, which, as illustrated, may be placed above the control system 202. The liquid food product may be fed into the product tank via a product supply valve 206. In addition to the product supply valve 206, a spray valve 208 may be provided. During filling, i.e. during production, the product supply valve 206 may be open and the spray valve 208 may be closed. During cleaning-in-place (CIP), the product supply valve 206 may be closed and the spray valve 208 may be open. Inside the product tank 204, a cleaning head 210 may be provided such that cleaning of the product tank 204 can be made in an efficient manner. In addition to the cleaning head 210, a level probe 224 may be provided in the product tank 204.

The control system 202 for intermittently filling food product into the packages 228 may be embodied in different ways. As illustrated herein, two packages 228 may be filled in parallel. For each of the packages, product valves 212a, 212b, 214a, 214b in combination with a pump 216a, 216b may be used. More particularly, as illustrated, the product valves may comprise inlet valves 212a, 212b placed upstream the pump 216a, 216b and outlet valves 214a, 214b placed downstream 216a, 216b the pump 216a, 216b. The combinations of product valves 212a, 212b, 216a, 216b are herein referred to as valve arrangements 215a, 215b. Even though it is illustrated that two product valves are to be used in combination with the pump, other configurations of the valve arrangements 215a, 215b are equally possible. For instance, it is possible to use only one product valve instead of the combination of two product valves and the pump.

As illustrated, downstream the valve arrangements 215a, 215b, filling nozzles 218a, 218b may be provided. As illustrated in fig. 2B, the filing nozzles 218a, 218b may be fed into the packages 228 during the filling mode such that efficient filling of the packages 228 can be provided.

The control system 202 can comprise the control unit 102 illustrated in fig. 1. Further, the control system 202 may comprise a condition monitoring device 226. By way of example, as illustrated, the control unit 102 may be communicatively connected to a condition monitoring device 226. Even though not illustrated, the control unit 102 and/or the condition monitoring device 226 may be connected to a server or other remote data processing equipment such that information between different food handling machines 200 can be shared such that e.g. threshold or the like can be set based on data captured from a plurality of food handling machines 200, either by using machine learning or artificial intelligence or statistical models.

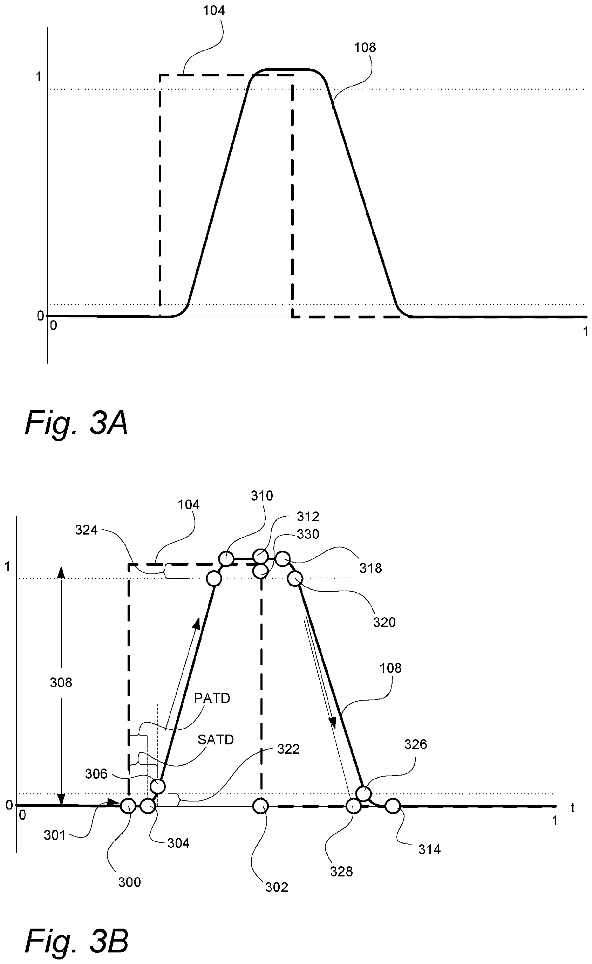

Fig. 3A is a graph illustrating the digital output 104 and the position data set 108. Put differently, the graph illustrates control data transmitted from the control unit 102 to the pneumatic actuator 108 as well as how the pneumatic actuator 108 respond to this control data.

Fig. 3B is also a graph illustrating the digital output 104 and the position data set 108 in line with fig. 3A, but in addition to these two, a number of parameters and points related to these parameters are illustrated.

As illustrated, a first parameter relevant to be taken into account for determining a condition of the pneumatic actuator 100 may be a primary activation time difference (PATD). This time difference can be calculated as a difference between an activation time point 300, that is, a start of the digital output 104, and a measured start activation time point 304, that is, a time point when a response to the digital output 104 can be seen in the position data set 108. This parameter may provide an indication of wear and/or defects of the product valves and/or input/output (I/O) equipment used for transmitting data.

A second parameter that also may be relevant to be taken into account for determining the condition of the pneumatic actuator 100 is a secondary activation time difference (SATD). This time difference can be the activation time point 300 of the digital output 104 and a measured time point 306 to reach a pre-set share 322 of an activation distance 308 of the pneumatic actuator 100. This parameter may indicate initial stick friction.

The first and second parameter may in combination or in isolation be used for indicating if there are cracks, grooves or damages 112 in the rubber coating 110 of the pneumatic actuator 100.

A third parameter may be an initial position 301 at the activation time point 300 of the digital output 104. This parameter may be used for determining a compression of the rubber coating 110 of the pneumatic actuator 100. Over time the rubber coating 110 may be worn out such that the compression is affected.

A fourth parameter may be a gradient at a point in which the pre-set share 322 of the activation movement is completed, such as at a point in which 10% of the activation movement is completed, such that total friction and restrictor setting deviation and/or air pressure deviation can be captured.

A fifth parameter may be a time difference between the activation time point 300 of the digital output 104 and an activation movement completion time point 310 such that end damping deviations can be captured.

A sixth parameter may be an actual position 312 at the deactivation time point 302 of the digital output 104 such that mechanical wear can be captured.

A seventh parameter may be a time difference between the deactivation time point 302 of the digital output 104 and a deactivation movement initiation time point 318 such that programmable logic circuits (PLC) variations can be captured.

An eighth parameter may be a time difference between the deactivation movement initiation time point 318 and a time point 320 in which a pre-set share 324 of the deactivation movement is completed, such as at a point in which in which 10% of the deactivation movement is completed, such that total friction and restrictor setting deviation and/or air pressure deviation can be captured.

A ninth parameter may be a time difference between a time point 326 in which a pre-set share of the activation movement is completed, such as at a point in which in which 10% of the activation movement has been completed and 90% of the activation movement remains, such that total friction and restrictor setting deviation and/or air pressure deviation can be captured.

A tenth parameter may be projected linear deactivate time 328 based on gradient. This provides a theoretical reference time to relate to for the final deactivation move end time.

An eleventh parameter may be a time difference at deactivation command which can capture PLC logic variation.

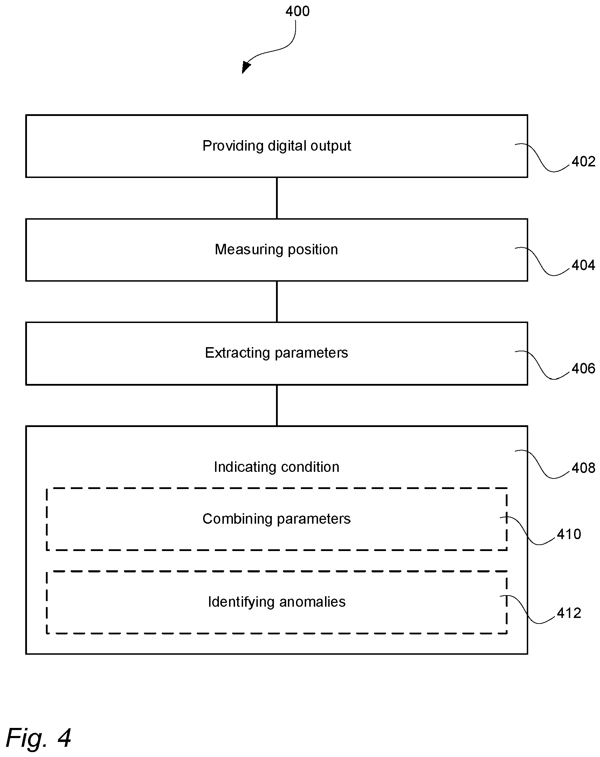

Fig. 4 is a flow chart illustrating a method 400 for determining the condition of the pneumatic actuator 100. The method 400 can comprise providing 402 the digital output 104, measuring 404 a position as a function of time of the pneumatic actuator 100, thereby forming the position data set 108, extracting 406 a number of parameters by comparing the digital output 104 and the position data set 108, and indicating 408 the condition of the pneumatic actuator 100 based on the parameters extracted.

The providing 402 the digital output 104, measuring 404 the position as a function of time, and extracting 406 the number of parameters can be repeated for a plurality of cycles. The number of cycles may be more than 1000 cycles.

Optionally, the indicating 408 the condition of the pneumatic actuator 100 may comprise combining 410 the number of parameters, and identifying 412 anomalies over time for the number of parameters.

From the description above follows that, although various embodiments of the invention have been described and shown, the invention is not restricted thereto, but may also be embodied in other ways within the scope of the subject-matter defined in the following claims.

## Claims

1. A method (400) for determining a condition of a pneumatic actuator (100), said method comprising
providing (402), by using a control unit (102), a digital output (104) representing a command to open the pneumatic actuator (100), said digital output (104) having an activation time point (300) and a deactivation time point (302),
measuring (404), by using a sensor (106), a position as a function of time of the pneumatic actuator (100), thereby forming a position data set (108),
extracting (406) a number of parameters by comparing the digital output (104) and the position data set (108), and
indicating (408) the condition of the pneumatic actuator (100) based on the parameters extracted.

2. The method according to claim 1, wherein the pneumatic actuator (100) forms part of a valve (212a-b, 214a-b) comprising a rubber coating (110), and the number of parameters comprise
a primary activation time difference (PATD) between the activation time point (300) of the digital output (104) and a measured start activation time point (304) of movement of the pneumatic actuator (100), and
a secondary activation time difference (SATD) between the activation time point (300) of the digital output (104) and a measured time point (306) to reach a pre-set share (322) of an activation distance (308) of the pneumatic actuator (100),
wherein the primary activation time difference (PATD) and the secondary activation time difference (SATD) are used for indicating if there is one or several cracks (112) in the rubber coating (110) of the pneumatic actuator (100).

3. The method according to claim 1 or 2, wherein the pneumatic actuator (100) forms part of the valve (212a-b, 214a-b) comprising the rubber coating (110), wherein the number of parameters further comprise
an initial position (301) at the activation time point (300) of the digital output (104),
wherein the initial position (301) at the activation time point (300) of the digital output (104) is used for determining damages, such as compression, wear or deformation, of the rubber coating (110) of the pneumatic actuator (100).

4. The method according to any one of the preceding claims, wherein the number of parameters comprises a gradient at a point in which a pre-set share (322) of the activation movement completed, such as at a point in which 10% of the activation movement is completed, such that total friction and restrictor setting deviation and/or air pressure deviation can be captured.

5. The method according to any one of the preceding claims, wherein the number of parameters comprises a time difference between the activation time point (300) of the digital output (104) and an activation movement completion time point (310), such that end damping deviations can be captured.

6. The method according to any one of the preceding claims, wherein the number of parameters comprises an actual position (312) at the deactivation time point (302) of the digital output (104) such that mechanical wear can be captured.

7. The method according to any one of the preceding claims, wherein the number of parameters comprises a time difference between a deactivation time point (302) of the digital output (104) and a deactivation movement initiation time point (318) such that programmable logic circuits (PLC) variations can be captured.

8. The method according to any one of the preceding claims, wherein the number of parameters comprises a time difference between the deactivation movement initiation time point (318) and a time point (320) in which a pre-set share (324) of the deactivation movement is completed, such as at a point in which in which 10% of the deactivation movement is completed, such that total friction and restrictor setting deviation and/or air pressure deviation can be captured.

9. The method according to any one of the preceding claims, wherein the providing (402) the digital output (104), measuring (404) the position as a function of time, and extracting (406) the number of parameters are repeated for a plurality of cycles, and
wherein the indicating (408) the condition of the pneumatic actuator (100) comprises
combining (410) the number of parameters extracted from the plurality of cycles,
identifying (412) anomalies over time for the number of parameters.

10. The method according to claim 9, wherein the plurality of cycles are more than 1000 cycles.

11. A control system (202) for determining a condition of a pneumatic actuator (100) configured to operate intermittently, said control system (202) comprising
a sensor communication device (107) arranged to communicate with a sensor (106) in the pneumatic actuator (100), said sensor communication device (107) being configured to measure a position as a function of time for the pneumatic actuator (100), thereby forming a position data set (108),
a control unit (102) comprising a processor (128) and a memory (130), said control unit (102) being configured to provide a digital output (104) to the pneumatic actuator (100), said digital output (104) representing a command to open the pneumatic actuator (100), said digital output (104) having an activation time point (300) and a deactivation time point (302), said control unit (102) being configured to extract a number of parameters by comparing the digital output (104) and the position data set (108), and to determine the condition of the pneumatic actuator (100) based on the number of parameters extracted.

12. A valve arrangement (215) for a food handling machine (200), said valve arrangement (215) comprising
a product valve (212a,b, 214a,b) comprising a pneumatic actuator (100), said product valve (212a,b, 214a,b) being arranged to control a food product flow within the food handling machine (200),
a control system (202) according to claim 11 for determining a condition of the pneumatic actuator (100), and
a condition monitoring device (226) configured to transmit a notification in case the condition of the pneumatic actuator (100) is outside a condition interval.

13. A food handling machine (200), such as a filling machine, comprising a valve arrangement according to claim 12.

14. The food handling machine (200), wherein the product valve (212a,b, 214a,b) is arranged for portioning food product into a food package (228).

15. A computer program product comprising program code for performing, when executed on a processor device, the method according to any one of the claims 1 to 10.
